# EUROPÄISCHE PATENTSCHRIFT

(11) **EP 4 003 796 B1**
(45) Veröffentlichungstag und Bekanntmachung des Hinweises auf die Patenterteilung: **07.06.2023**
(21) Anmeldenummer: 20734117.3
(22) Anmeldetag: 10.06.2020
(51) Int. Cl.: B60T 7/12, B60T 8/1766, B60T 13/66, B60T 13/68, B60T 13/74

(54) **VERFAHREN ZUM ANSTEUERN EINES HYDRAULISCHEN BREMSSYSTEMS IN EINEM FAHRZEUG**
METHOD FOR CONTROLLING A HYDRAULIC BRAKE SYSTEM IN A VEHICLE
PROCÉDÉ POUR COMMANDER UN SYSTÈME DE FREIN HYDRAULIQUE DANS UN VÉHICULE

(30) Priorität: 29.07.2019 DE 102019211236
(43) Veröffentlichungstag der Anmeldung: 01.06.2022
(73) Patentinhaber: Robert Bosch GmbH, 70442 Stuttgart (DE)
(72) Erfinder: RETTENMEIER, Bernhard, 71691 Freiberg am Neckar (DE)
(86) Internationale Anmeldenummer: PCT/EP2020/066067
(87) Internationale Veröffentlichungsnummer: WO 2021/018456

(56) Entgegenhaltungen:
- WO-A1-2004/089713
- DE-A1-102016 215 759
- DE-A1-102017 209 617

## Beschreibung

Die Erfindung bezieht sich auf ein Verfahren zum Ansteuern eines hydraulischen Bremssystems in einem Fahrzeug zum Festsetzen des Fahrzeugs im Stillstand.

### Stand der Technik

In der WO 2018/108351 A1 wird ein hydraulisches Bremssystem in einem Fahrzeug mit zwei Bremskreisen zur Versorgung von Radbremseinheiten mit hydraulischem Bremsdruck beschrieben. Die Bremskreise sind an einem gemeinsamen Hauptbremszylinder angeschlossen, aus dem bei einer Betätigung des Bremspedals Bremsfluid in die Bremskreise gefördert wird. Dem Hauptbremszylinder ist ein elektromechanischer Bremsdruckerzeuger zugeordnet, der den Hauptbremszylinder betätigt bzw. unterstützt. Der Bremsdruckerzeuger umfasst einen Elektromotor, der den Hauptbremszylinder betätigt.

In jedem Bremskreis befindet sich eine Hydraulikpumpe, die von einem gemeinsamen Pumpenmotor angetrieben werden. Die Hydraulikpumpen sind Teil eines elektronischen Stabilitätsprogrammes, über das zur Fahrzeugstabilisierung ein selbsttätiger Eingriff in das Bremssystem durchgeführt werden kann.

Ein Verfahren zur Erzeugung vom hydraulischen Bremsdruck zum Festsetzen eines Fahrzeugs im Stillstand wird in der DE 10 2016 215759 A1 beschrieben.

### Offenbarung der Erfindung

Das erfindungsgemäße Verfahren bezieht sich auf das Ansteuern eines hydraulischen Bremssystems in einem Fahrzeug zum Festsetzen des Fahrzeugs im Stillstand. Das hydraulische Bremssystem weist mindestens eine Hydraulikpumpe zum Erzeugen von hydraulischem Bremsdruck im Bremsfluid des Bremssystems auf, wobei zum Festsetzen des Fahrzeugs im Stillstand die Hydraulikpumpe aktiviert und der Bremsflüssigkeit über offene Einlassventile zu Radbremseinrichtungen einer ersten Fahrzeugachse geleitet wird. Hierbei handelt es sich insbesondere um die Hinterachse des Fahrzeugs, die am linken und rechten Hinterrad jeweils eine Radbremseinrichtung aufweist. Zum Festsetzen des Fahrzeugs im Stillstand werden die Radbremseinrichtungen bei geöffneten Einlassventilen mit dem erhöhten Bremsdruck beaufschlagt, der von der Hydraulikpumpe erzeugt wird.

Die Einlassventile an den Radbremseinrichtungen der zweiten und gegebenenfalls weiteren Fahrzeugachse, insbesondere der Vorderachse des Fahrzeugs, können dagegen geschlossen sein, sie werden jedoch für den Fall, dass während des Festsetzens des Fahrzeugs im Stillstand eine geänderte Bremsdruckanforderung im Bremssystem vorliegt, geöffnet. Zugleich bleiben die Auslassventile an den Radbremseinrichtungen dieser Fahrzeugachse für den Zeitraum des Festsetzens des Fahrzeugs geschlossen.

Mit diesem Verfahren werden verschiedene Vorteile erzielt. Wenn beispielsweise der Fahrer während des Festsetzens des Fahrzeugs das Bremspedal betätigt, wird eine geänderte Bremsdruckanforderung im Bremssystem erzeugt, wobei der erhöhte Bremsdruck über die geöffneten Einlassventile den Radbremseinrichtungen der zweiten Fahrzeugachse zugeführt wird. Hierdurch wird zum einen eine erhöhte Bremskraft an der weiteren Fahrzeugachse erzeugt, zum anderen wird ein weicheres Bremsgefühl im Bremspedal generiert.

Darüber hinaus werden Schaltgeräusche vermieden, die beim Öffnen bzw. Schließen von Bremsventilen auftreten können. Das Verlagern von Bremsfluid aus einem Hauptbremszylinder des hydraulischen Bremssystems zu den Radbremseinrichtungen an der zweiten Fahrzeugachse führt zu einer Druckreduzierung im Hauptbremszylinder, die in der Regel von einer Bremsdruckregeleinheit im hydraulischen Bremssystem ausgeglichen wird. In Kombination mit einem weiteren Regelsystem, das in den Radbremseinrichtungen an der zweiten Fahrzeugachse die Stellung der Einlass- und Auslassventile reguliert, kann dies zu einer Oszillation im Bremsfluid des Bremssystems führen und eine wiederholte Betätigung der Einlass- und Auslassventile zur Folge haben.

Bei dem erfindungsgemäßen Verfahren werden derartige Oszillationen und Schaltvorgänge in den Bremsventilen der Radbremseinrichtungen an der zweiten Fahrzeugachse vermieden. Zumindest solange das Fahrzeug im Stillstand festgesetzt wird, bleiben die Einlassventile an den Radbremseinrichtungen der zweiten Fahrzeugachse zumindest zeitweise geöffnet und die Auslassventile geschlossen, so dass wiederholte Öffnungs- und Schließvorgänge an diesen Bremsventilen unterbleiben. Der Druckabfall im Hauptbremszylinder kann ausgeglichen werden, zugleich wird der Bremsdruck in den Radbremseinrichtungen der zweiten Fahrzeugachse an den Druck im Hauptbremszylinder angeglichen, so dass eine zusätzliche Bremskraft erzeugt wird.

Diese Ausführung ermöglicht es, dass verschiedene Regelsysteme im hydraulischen Bremssystem zusammenarbeiten und ein widersprüchliches Verhalten der verschiedenen Regelsysteme vermieden wird. Zum einen wird über einen Druckregler ein Solldruck im Hauptbremszylinder des Bremssystems eingestellt. Zum andern wird über einen weiteren Druckregler, der das Öffnen und Schließen der Einlass- und Auslassventile an den Radbremseinrichtungen der zweiten Fahrzeugachse steuert, der im Hauptbremszylinder gemessene hydraulische Bremsdruck auch in den Radbremseinrichtungen der zweiten Fahrzeugachse eingestellt. Aufgrund eines unterschiedlichen zeitlichen Systemverhaltens - der die Einlass- und Auslassventile steuernde Druckregler reagiert schneller als der den Bremsdruck im Hauptbremszylinder steuernde Druckregler - können im Stand der Technik die vorbeschriebenen Geräuschentwicklungen durch die hohe Betätigung der Einlass- und Auslassventile entstehen, außerdem entstehen die Druckschwingungen in den Bremskreisen. Durch die erfindungsgemäße Ausführung mit dem zumindest zeitweisen Öffnen der Einlassventile an den Radbremseinrichtungen der zweiten Fahrzeugachse und dem Schließen der Auslassventile an diesen Radbremseinrichtungen werden Druckschwingungen im Bremssystem vermieden.

Die Auslassventile an den Radbremseinrichtungen der zweiten Fahrzeugachse bleiben für den Zeitraum des Festsetzens des Fahrzeugs geschlossen. Die Einlassventile an den Radbremseinrichtungen der zweiten Fahrzeugachse können so lange geöffnet bleiben, wie das Fahrzeug im Stillstand festgesetzt wird. Es kann jedoch zweckmäßig sein, den Zeitraum des Öffnens der Einlassventile an den Radbremseinrichtungen der zweiten Fahrzeugachse zu begrenzen und die Einlassventile zu schließen, sobald der Bremsdruck in den Radbremseinrichtungen der zweiten Fahrzeugachse einen Maximaldruck erreicht hat. Dieser Maximaldruck entspricht insbesondere dem aktuellen Bremsdruck im Hauptbremszylinder. Auf diese Weise ist sichergestellt, dass in den Radbremseinrichtungen der zweiten Fahrzeugachse beispielsweise bei einer Betätigung des Bremspedals durch den Fahrer ein Bremsdruck eingestellt wird, der dem eingestellten Bremsdruck im Hauptbremszylinder entspricht. Ist dieses Bremsdruckniveau erreicht, können die Einlassventile an den Radbremseinrichtungen der zweiten Fahrzeugachse geschlossen werden.

Das genannte Verfahren bezieht sich zum einen auf das Festsetzen des Fahrzeugs im Stillstand, indem der Bremsdruck über die offenen Einlassventile zu den Radbremseinrichtungen der ersten Fahrzeugachse geleitet wird, und zum andern auf eine sich ändernde Bremsdruckanforderung während des Festsetzens des Fahrzeugs im Stillstand. Diese Änderung der Bremsdruckanforderung wird entweder über eine Betätigung des Bremspedals durch den Fahrer erzeugt oder über einen zusätzlichen Bremsdruckerzeuger im Bremssystem, der insbesondere unabhängig von der Hydraulikpumpe ausgebildet ist, welche zum Festsetzen des Fahrzeugs im Stillstand aktiviert wird. In dieser Ausführung weist das hydraulische Bremssystem somit mindestens zwei Bremsdruckerzeugungseinheiten auf.

Der Bremsdruckerzeuger, welcher als separate Baueinheit und unabhängig von der Hydraulikpumpe ausgebildet ist, ist beispielsweise ein iBooster, der einen Bremskraftverstärker bildet, welcher mittels eines Elektromotors und gegebenenfalls eines Getriebes den Hauptbremszylinder des Bremssystems betätigt.

Der Bremsdruckerzeuger kann zum Verstärken einer Bremsanforderung eingesetzt werden, welche der Fahrer über eine Betätigung des Bremspedals vorgibt. Der Bremsdruckerzeuger kann aber auch unabhängig von einer Pedalbetätigung durch den Fahrer aktiviert werden, beispielsweise über ein Fahrzeugregelsystem oder Bremsdruckregelsystem, zum Beispiel zum Realisieren eines autonomen Fahreingriffs.

Das Festsetzen des Fahrzeugs im Stillstand erfolgt entweder im Rahmen eines Parkvorgangs mit dauerhaftem Festsetzen des Fahrzeugs oder nur kurzzeitig, beispielsweise im Rahmen einer Berganfahrhilfe.

Bei einer manuellen Betätigung des Bremspedals durch den Fahrer und des Festsetzens des Fahrzeugs wird über die offenen Einlassventile an den Radbremseinrichtungen der zweiten Fahrzeugachse Bremsfluid in diese Radbremseinrichtungen verschoben, wodurch ein weiches, nachgiebiges Bremspedalverhalten erreicht wird.

Gemäß noch einer weiteren vorteilhaften Ausführung wird das Verfahren bei hydraulischen Bremssystemen eingesetzt, die mit einer zusätzlichen elektromechanischen Bremsvorrichtung ausgestattet sind, welche als Feststell- oder Parkbremse eingesetzt werden kann. Die elektromechanische Bremsvorrichtung umfasst mindestens einen elektrischen Bremsmotor, der zur Erzeugung von Bremskraft einen Bremskolben gegen eine Bremsscheibe verstellt. Während des Festsetzens des Fahrzeugs wird bei dem erfindungsgemäßen Verfahren über die Hydraulikpumpe ein Bremsdruck erzeugt, der über die offenen Einlassventile zu den Radbremseinrichtungen der ersten Fahrzeugachse geleitet wird, so dass an diesen Radbremseinrichtungen zusätzlich zu der elektromechanischen Bremskraft auch eine hydraulische Bremskraft erzeugt wird.

Bei der Hydraulikpumpe handelt es sich beispielsweise um eine ESP-Pumpe (elektronisches Stabilitätsprogramm).

Die Erfindung bezieht sich des Weiteren auf ein Steuergerät, das zur Ansteuerung der einstellbaren Komponenten des hydraulischen Bremssystems und gegebenenfalls auch der elektromechanischen Bremsvorrichtung dient. In dem Steuergerät werden die vorbeschriebenen Verfahrensschritte durchgeführt bzw. die Komponenten des Bremssystems zur Realisierung der Verfahrensschritte angesteuert.

Die Erfindung bezieht sich auch auf ein hydraulisches Bremssystem in einem Fahrzeug mit einem vorbeschriebenen Steuergerät. Das Bremssystem kann gegebenenfalls mit einer elektromechanischen Bremsvorrichtung mit mindestens einem elektrischen Bremsmotor ausgestattet sein. Vorteilhafterweise sind beide Radbremseinrichtungen der ersten Fahrzeugachse jeweils mit einer elektromechanischen Bremsvorrichtung ausgestattet, nicht jedoch die Radbremseinrichtungen der zweiten Fahrzeugachse.

Die Erfindung bezieht sich außerdem auf ein Computerprogrammprodukt mit einem Programmcode, der dazu ausgelegt ist, die vorbeschriebenen Verfahrensschritte auszuführen. Das Computerprogrammprodukt läuft in einem vorbeschriebenen Steuergerät ab.

Weitere Vorteile und zweckmäßige Ausführungen sind den weiteren Ansprüchen, der Figurenbeschreibung und den Zeichnungen zu entnehmen. Es zeigen:
- Fig. 1: einen hydraulischen Schaltplan eines Bremssystems in einem Fahrzeug mit zwei Bremskreisen,
- Fig. 2: einen Schnitt durch eine Radbremseinrichtung, die mit einer elektromechanischen Bremsvorrichtung ausgestattet ist.

In den Figuren sind gleiche Bauteile mit gleichen Bezugszeichen versehen.

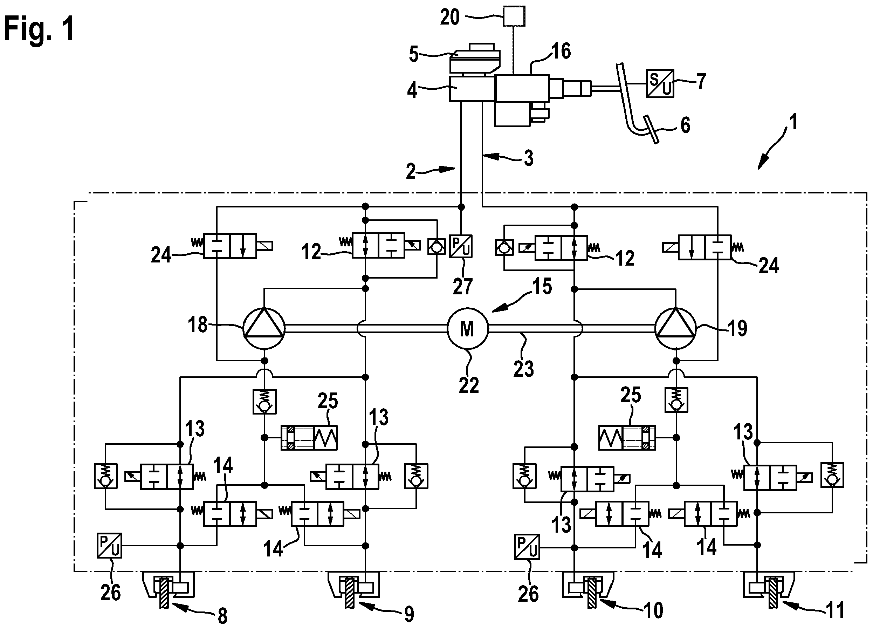

Das im Hydraulikschaltplan gemäß Fig. 1 dargestellte hydraulische Bremssystem 1 in einem Fahrzeug weist zwei über Kreuz angeordnete Bremskreise 2 und 3 auf. Der erste Bremskreis 2 und der zweite Bremskreis 3 dienen zur Versorgung von Radbremseinrichtungen 8 und 9 an den Rädern hinten rechts und vorne links bzw. 10 und 11 an den Rädern vorne rechts und hinten links mit hydraulischem Bremsfluid. Die beiden Bremskreise 2, 3 sind an einen gemeinsamen Hauptbremszylinder 4 angeschlossen, der über einen Bremsflüssigkeitsvorratsbehälter 5 mit Bremsfluid versorgt wird. Der Hauptbremszylinder 4 wird vom Fahrer über das Bremspedal 6 betätigt, der vom Fahrer ausgeübte Pedalweg wird über einen Pedalwegsensor 7 gemessen. Zwischen dem Bremspedal 6 und dem Hauptbremszylinder 4 befindet sich ein elektromechanischer Bremsdruckerzeuger 16, der beispielsweise einen Elektromotor umfasst, welcher bevorzugt über ein Getriebe den Hauptbremszylinder 4 betätigt (iBooster).

In jedem Bremskreis 2, 3 ist ein Umschaltventil 12 angeordnet, das im Strömungsweg zwischen dem Hauptbremszylinder und den jeweiligen Radbremseinrichtungen 8 und 9 bzw. 10 und 11 liegt. Die Umschaltventile 12 sind in ihrer stromlosen Grundstellung geöffnet. Jedem Umschaltventil 12 ist ein parallel geschaltetes Rückschlagventil zugeordnet, das in Richtung der jeweiligen Radbremseinrichtungen durchströmbar ist.

Zwischen den Umschaltventilen 12 und den jeweiligen Radbremseinrichtungen 8, 9 bzw. 10, 11 befinden sich Einlassventile 13, denen Rückschlagventile zugeordnet sind, welche in Gegenrichtung, also von den Radbremseinrichtungen in Richtung zum Hauptbremszylinder durchströmbar sind. Die Einlassventile 13 an den Vorder- und Hinterrädern des Fahrzeugs sind stromlos geöffnet.

Jeder Radbremseinrichtung 8, 9 bzw. 10, 11 ist jeweils ein Auslassventil 14 zugeordnet, das stromlos geschlossen ist. Die Auslassventile 14 sind jeweils mit der Saugseite einer Pumpeneinheit 15 verbunden, die in jedem Bremskreis 2, 3 eine Pumpe 18 bzw. 19 aufweist. Der Pumpeneinheit ist ein gemeinsamer elektrischer Antriebs- bzw. Pumpenmotor 22 zugeordnet, der über eine Welle 23 beide Pumpen 18 und 19 betätigt. Die Druckseite der Pumpe 18 bzw. 19 ist an einen Leitungsabschnitt zwischen dem Umschaltventil 12 und den beiden Einlassventilen 13 pro Bremskreis angeschlossen.

Die Saugseiten der Pumpen 18 und 19 sind jeweils mit einem Haupt- bzw. Hochdruckschaltventil 24 verbunden, das an den Hauptbremszylinder 4 hydraulisch angeschlossen ist. Bei einem fahrdynamischen Regeleingriff können für einen schnellen Bremsdruckaufbau die im stromlosen Zustand geschlossenen Hauptschaltventile 24 geöffnet werden, so dass die Pumpen 18 und 19 unmittelbar aus dem Hauptbremszylinder 4 Hydraulikfluid ansaugen. Dieser Bremsdruckaufbau kann unabhängig von einer Betätigung des Bremssystems durch den Fahrer durchgeführt werden. Die Pumpeneinheit 15 mit den beiden Einzelpumpen 18 und 19, dem elektrischen Pumpenmotor 22 und der Welle 23 gehört zu einem Fahrerassistenzsystem und bildet ein elektronisches Stabilitätsprogramm (ESP-System), das insbesondere zur Fahrzeugstabilisierung aktiviert wird. Dementsprechend bilden die beiden Einzelpumpen 18 und 19 ESP-Pumpen.

Zwischen den Auslassventilen 14 und der Saugseite der Pumpen 18 und 19 befindet sich pro Bremskreis 2, 3 ein Hydrospeicher 25, der zur Zwischenspeicherung von Bremsflüssigkeit dient, welche während eines fahrdynamischen Eingriffs durch die Auslassventile 14 aus den Radbremseinheiten 8, 9 bzw. 10, 11 ausgelassen wird. Jedem Hydrospeicher 25 ist ein Rückschlagventil zugeordnet, das in Richtung der Saugseiten der Pumpen 18, 19 öffnet.

Zur Druckmessung befindet sich in jedem Bremskreis 2, 3 im Bereich der Radbremseinrichtungen 8, 9 bzw. 10, 11 jeweils ein Drucksensor 26. Ein weiterer Drucksensor 27 ist im Bremskreis 2 benachbart zum Hauptbremszylinder 4 angeordnet.

Die Drucksensoren 26 können gegebenenfalls entfallen.

Das Bremssystem 1 ist mit mindestens einem Steuergerät 20 ausgestattet, in welchem Stellsignale zur Ansteuerung der Komponenten des Bremssystems wie Ventile, Pumpen und Bremsdruckerzeuger erzeugt werden. Gegebenenfalls weisen der iBooster und das ESP-System jeweils ein eigenes Steuergerät auf.

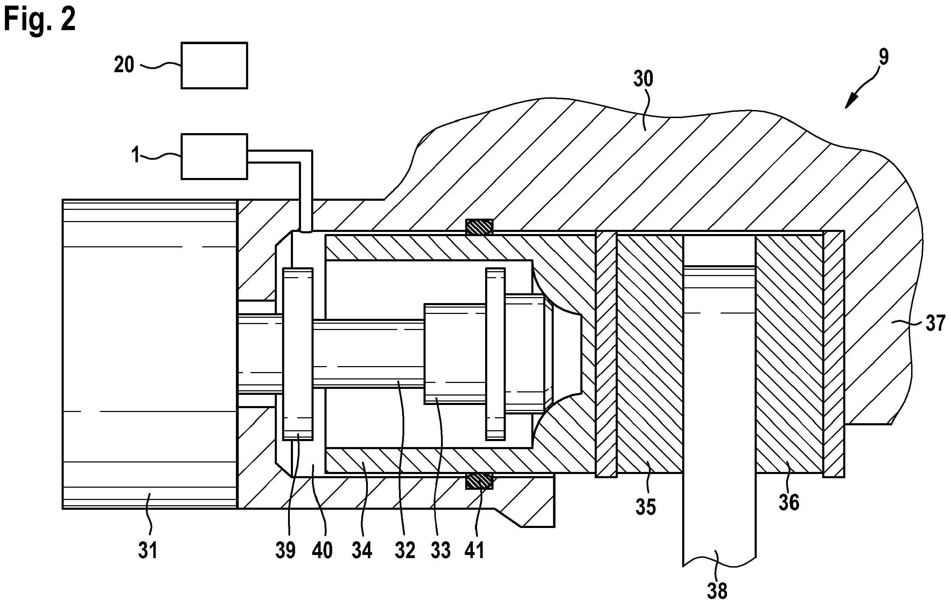

In Fig. 2 ist die Radbremseinrichtung 9, die an einem Rad an der Hinterachse des Fahrzeugs angeordnet ist, im Detail dargestellt. Die Radbremseinrichtung 9 ist Teil des hydraulischen Bremssystems 1 und wird aus dem Hinterachs-Bremskreis mit Bremsfluid 40 versorgt. Die Radbremseinrichtung 9 weist außerdem eine elektromechanische Bremsvorrichtung auf, die bevorzugt als Feststellbremse zum Festsetzen eines Fahrzeugs im Stillstand eingesetzt wird, jedoch auch bei einer Bewegung des Fahrzeugs, insbesondere bei kleineren Fahrzeuggeschwindigkeiten unterhalb eines Geschwindigkeits-Grenzwerts zum Abbremsen des Fahrzeugs eingesetzt werden kann. Die elektromechanische Bremsvorrichtung kann sowohl zum dauerhaften Festsetzen des Fahrzeugs während des Parkens als auch zum kurzzeitigen Festsetzen, zum Beispiel als Anfahrhilfe, eingesetzt werden. Vorteilhafterweise sind die beiden Radbremseinrichtungen 8 und 11 an der Hinterachse mit jeweils einer elektromechanischen Bremsvorrichtung ausgestattet, nicht jedoch die beiden Radbremseinrichtungen 9 und 10 an der Vorderachse.

Die elektromechanische Bremsvorrichtung umfasst einen Bremssattel 30 mit einer Zange 37, welche eine Bremsscheibe 38 übergreift. Als Stellglied weist die Bremsvorrichtung einen Gleichstrom-Elektromotor als Bremsmotor 39 auf, dessen Rotorwelle eine Spindel 32 rotierend antreibt, auf der eine Spindelmutter 33 rotationsfest gelagert ist. Bei einer Rotation der Spindel 32 wird die Spindelmutter 33 axial verstellt. Die Spindelmutter 33 bewegt sich innerhalb eines Bremskolbens 34, der Träger eines Bremsbelags 35 ist, welcher von dem Bremskolben 34 gegen die Bremsscheibe 38 gedrückt wird. Auf der gegenüberliegenden Seite der Bremsscheibe 38 befindet sich ein weiterer Bremsbelag 36, der ortsfest an der Zange 37 gehalten ist. Der Bremskolben 34 ist auf seiner Außenseite über einen umgreifenden Dichtring 41 druckdicht gegenüber dem aufnehmenden Gehäuse abgedichtet.

Innerhalb des Bremskolbens 34 kann sich die Spindelmutter 33 bei einer Drehbewegung der Spindel 32 axial nach vorne in Richtung auf die Bremsscheibe 38 zu bzw. bei einer entgegengesetzten Drehbewegung der Spindel 32 axial nach hinten bis zum Erreichen eines Anschlags 39 bewegen. Zum Erzeugen einer Klemmkraft beaufschlagt die Spindelmutter 33 die innere Stirnseite des Bremskolbens 34, wodurch der axial verschieblich in der Bremsvorrichtung gelagerte Bremskolben 34 mit dem Bremsbelag 35 gegen die zugewandte Stirnfläche der Bremsscheibe 38 gedrückt wird.

Für die hydraulische Bremskraft wirkt auf den Bremskolben 34 der hydraulische Druck des Bremsfluids 40 aus der hydraulischen Fahrzeugbremse 1. Der hydraulische Druck kann auch im Fahrzeugstillstand bei Betätigung der elektromechanischen Bremsvorrichtung unterstützend wirksam sein, so dass sich die Gesamt-Bremskraft aus dem elektromotorisch gestellten Anteil und dem hydraulischen Anteil zusammensetzt. Während der Fahrt des Fahrzeugs ist entweder nur die hydraulische Fahrzeugbremse aktiv oder sowohl die hydraulische Fahrzeugbremse als auch die elektromechanische Bremsvorrichtung oder nur die elektromechanische Bremsvorrichtung, um Bremskraft zu erzeugen. Die Stellsignale zur Ansteuerung sowohl der einstellbaren Komponenten der hydraulischen Fahrzeugbremse 1 als auch der elektromechanischen Radbremseinrichtung 9 werden in dem Steuergerät 20 erzeugt.

Um beim Festsetzen des Fahrzeugs im Stillstand ein subjektiv angenehmes Bremsgefühl und objektiv eine Verringerung der Geräuschentwicklung sowie eine Verminderung oder Vermeidung von Schwingungen im Bremsfluid zu erreichen, werden verschiedene Maßnahmen zeitgleich durchgeführt. Das Festsetzen des Fahrzeugs im Stillstand erfolgt zum einen über eine Betätigung der elektromechanischen Bremsvorrichtung, indem die elektrischen Bremsmotoren an den Radbremseinrichtungen 8 und 11 der Hinterachse angesteuert werden und die Bremsbeläge 35 und 36 gegen die Bremsscheibe 38 beaufschlagt werden. Zum andern werden zur Unterstützung und Erhöhung der Bremskraft an den Radbremseinrichtungen der Hinterachse auch die ESP-Pumpen 18 und 19 betätigt, so dass Bremsdruck über die offenen Einlassventile 13 zu Radbremseinrichtungen 8 und 11 der Hinterachse einströmt.

Falls sich währenddessen die Bremsdruckanforderung im Bremssystem 1 ändert, beispielsweise durch Betätigung des Bremspedals 6 oder über eine Aktivierung des Bremsdruckerzeugers bzw. iBoosters 16, werden die Einlassventile 13 an den Radbremseinrichtungen 9, 10 der Vorderachse geöffnet bzw. geöffnet gehalten und zugleich die Auslassventile 14 an diesen Radbremseinrichtungen 9, 10 geschlossen bzw. geschlossen gehalten. Daraufhin kann der Bremsdruck aus dem Hauptbremszylinder 4 über die geöffneten Einlassventile 13 zu den Radbremseinrichtungen 9 und 10 der Vorderachse strömen, so dass sich in diesen Radbremseinrichtungen 9 und 10 der gleiche Bremsdruck wie im Hauptbremszylinder einstellt. Der Bremsdruck in den Radbremseinrichtungen 9 und 10 der Vorderachse steigt dynamisch bis zu dem Bremsdruck des Hauptbremszylinders 4 an. Nachdem der Bremsdruck des Hauptbremszylinders 4 erreicht ist, können die Einlassventile 13 an den Radbremseinrichtungen 9 und 10 geschlossen werden.

Insgesamt wird durch diese Maßnahmen eine Beruhigung im Bremsfluid des Bremssystems 1 erreicht, da ein häufiges Öffnen und Schließen der Einlassventile 13 und Auslassventile an den Radbremseinrichtungen 9 und 10 der Vorderachse entfällt. Der Bremsdruckerzeuger bzw. iBooster 16, der langsamer reagiert als das Öffnen und Schließen der Ventile 13, 14, kann einen gewünschten Druck im Hauptbremszylinder 16 einstellen, ohne dass die Gefahr einer Druckoszillation in den Bremskreisen, hervorgerufen durch die Wechselwirkung bei der Betätigung des iBoosters 16 und einem raschen Öffnen und Schließen der Ventile, besteht.

Sobald das Fahrzeug nicht mehr im Stillstand festgesetzt werden soll, können sämtliche Einlassventile 13 und Auslassventile 14 an den Radbremseinrichtungen 8 bis 11 in der Weise betätigt werden, dass ein Fahrerbremswunsch oder eine Bremsanforderung eines Regelsystems in gewünschter Weise umgesetzt werden.

## Patentansprüche

1. Verfahren zum Ansteuern eines hydraulischen Bremssystems in einem Fahrzeug, wobei das hydraulische Bremssystem mit einer Hydraulikpumpe (18, 19) zur Erzeugung von hydraulischem Bremsdruck ausgestattet ist, wobei zum Festsetzen des Fahrzeugs im Stillstand die Hydraulikpumpe (18, 19) aktiviert und Bremsflüssigkeit über offene Einlassventile (13) zu Radbremseinrichtungen (8, 11) einer ersten Fahrzeugachse geleitet wird, wohingegen Einlassventile (13) an Radbremseinrichtungen (9, 10) einer zweiten Fahrzeugachse geschlossen sind, **dadurch gekennzeichnet, dass** für den Fall, dass sich eine Bremsdruckanforderung im Bremssystem (1) ändert, die Einlassventile (13) an den Radbremseinrichtungen (9, 10) der zweiten Fahrzeugachse zumindest zeitweise geöffnet werden und die Auslassventile (14) an den Radbremseinrichtungen (9, 10) der zweiten Fahrzeugachse für den Zeitraum des Festsetzens des Fahrzeugs geschlossen bleiben.

2. Verfahren nach Anspruch 1, **dadurch gekennzeichnet, dass** die Einlassventile (13) an den Radbremseinrichtungen (9, 10) der zweiten Fahrzeugachse so lange geöffnet bleiben, wie das Fahrzeug im Stillstand festgesetzt wird.

3. Verfahren nach Anspruch 2, **dadurch gekennzeichnet, dass** die Einlassventile (13) an den Radbremseinrichtungen (9, 10) der zweiten Fahrzeugachse so lange geöffnet bleiben, wie das Fahrzeug im Stillstand festgesetzt wird, jedoch der Bremsdruck in den Radbremseinrichtungen (9, 10) der zweiten Fahrzeugachse einen Maximaldruck noch nicht erreicht hat.

4. Verfahren nach einem der Ansprüche 1 bis 3, **dadurch gekennzeichnet, dass** die geänderte Bremsdruckanforderung im Bremssystem (19 über eine Betätigung des Bremspedals durch den Fahrer erzeugt wird.

5. Verfahren nach einem der Ansprüche 1 bis 4, **dadurch gekennzeichnet, dass** die geänderte Bremsdruckanforderung im Bremssystem (1) über einen separat von der Hydraulikpumpe (18, 19) ausgeführten, ansteuerbaren Bremsdruckerzeuger (16) erzeugt wird.

6. Verfahren nach Anspruch 5, **dadurch gekennzeichnet, dass** der separat von der Hydraulikpumpe (18, 19) ausgeführte, ansteuerbare Bremsdruckerzeuger (16) als ein Bremskraftverstärker ausgebildet ist, der mittels eines Elektromotors den Hauptbremszylinder des Bremssystems betätigt.

7. Verfahren nach einem der Ansprüche 1 bis 6, **dadurch gekennzeichnet, dass** die Hydraulikpumpe (18, 19) aktiviert bleibt, solange die Einlassventile (13) an den Radbremseinrichtungen (9, 10) der zweiten Fahrzeugachse geöffnet bleiben.

8. Verfahren nach einem der Ansprüche 1 bis 7, **dadurch gekennzeichnet, dass** im Stillstand ein elektrischer Bremsmotor (31) einer elektromechanischen Bremsvorrichtung in der Radbremseinrichtung (8, 11) der ersten Fahrzeugachse betätigt wird.

9. Verfahren nach einem der Ansprüche 1 bis 8, **dadurch gekennzeichnet, dass** die Hydraulikpumpe (18, 19) als ESP-Pumpe (Elektronisches Stabilitätsprogramm) ausgebildet ist.

10. Steuergerät zur Ansteuerung der einstellbaren Komponenten eines hydraulischen Bremssystems (1) in einem Fahrzeug zur Durchführung des Verfahrens nach einem der Ansprüche 1 bis 9.

11. Hydraulisches Bremssystem in einem Fahrzeug mit einem Steuergerät (20) nach Anspruch 10.

12. Bremssystem nach Anspruch 11, **dadurch gekennzeichnet, dass** das Bremssystem (1) eine elektromechanische Bremsvorrichtung mit mindestens einem elektrischen Bremsmotor (31) umfasst, der zur Erzeugung von Bremskraft einen Bremskolben (34) gegen eine Bremsscheibe (38) verstellt.

13. Computerprogrammprodukt mit einem Programmcode, der dazu ausgelegt ist, Schritte des Verfahrens nach einem der Ansprüche 1 bis 9 auszuführen, wenn das Computerprogrammprodukt in einem Steuergerät gemäß Anspruch 10 abläuft.

## Claims

1. Method for controlling a hydraulic brake system in a vehicle, wherein the hydraulic brake system is equipped with a hydraulic pump (18, 19) for generating hydraulic brake pressure, wherein, for holding the vehicle stationary, the hydraulic pump (18, 19) is activated and brake fluid is conducted *via* open inlet valves (13) to wheel brake devices (8, 11) of a first vehicle axle, whereas inlet valves (13) at wheel brake devices (9, 10) of a second vehicle axle are closed, **characterized in that**, in the event that a brake pressure demand in the brake system (1) changes, the inlet valves (13) at the wheel brake devices (9, 10) of the second vehicle axle are opened at least temporarily and the outlet valves (14) at the wheel brake devices (9, 10) of the second vehicle axle remain closed for the period of time during which the vehicle is held stationary.

2. Method according to Claim 1, **characterized in that** the inlet valves (13) at the wheel brake devices (9, 10) of the second vehicle axle remain open as long as the vehicle is held stationary.

3. Method according to Claim 2, **characterized in that** the inlet valves (13) at the wheel brake devices (9, 10) of the second vehicle axle remain open as long as the vehicle is held stationary but the brake pressure in the wheel brake devices (9, 10) of the second vehicle axle has not yet reached a maximum pressure.

4. Method according to one of Claims 1 to 3, **characterized in that** the changed brake pressure demand in the brake system (19) is produced *via* actuation of the brake pedal by the driver.

5. Method according to one of Claims 1 to 4, **characterized in that** the changed brake pressure demand in the brake system (1) is produced *via* a controllable brake pressure generator (16) configured separately from the hydraulic pump (18, 19).

6. Method according to Claim 5, **characterized in that** the controllable brake pressure generator (16) configured separately from the hydraulic pump (18, 19) is in the form of a brake force booster which actuates the master brake cylinder of the brake system by means of an electric motor.

7. Method according to one of Claims 1 to 6, **characterized in that** the hydraulic pump (18, 19) remains activated as long as the inlet valves (13) at the wheel brake devices (9, 10) of the second vehicle axle remain open.

8. Method according to one of Claims 1 to 7, **characterized in that**, while the vehicle is stationary, an electric brake motor (31) of an electromechanical brake mechanism in the wheel brake device (8, 11) of the first vehicle axle is actuated.

9. Method according to one of Claims 1 to 8, **characterized in that** the hydraulic pump (18, 19) is in the form of an ESP pump (electronic stability program).

10. Control unit for controlling the adjustable components of a hydraulic brake system (1) in a vehicle for carrying out the method according to one of Claims 1 to 9.

11. Hydraulic brake system in a vehicle having a control unit (20) according to Claim 10.

12. Brake system according to Claim 11, **characterized in that** the brake system (1) comprises an electromechanical brake mechanism having at least one electric brake motor (31) which displaces a brake piston (34) towards a brake disk (38) in order to generate brake force.

13. Computer program product having a program code which is designed to perform steps of the method according to one of Claims 1 to 9 when the computer program product runs in a control unit according to Claim 10.

## Revendications

1. Procédé de commande d'un système de freinage hydraulique dans un véhicule, le système de freinage hydraulique étant équipé d'une pompe hydraulique (18, 19) pour générer une pression de freinage hydraulique ; pour immobiliser le véhicule à l'arrêt, la pompe hydraulique (18, 19) étant activée et le liquide de frein étant dirigé vers des appareils de freinage de roue (8, 11) d'un premier essieu de véhicule par l'intermédiaire de soupapes d'admission ouvertes (13), tandis que des soupapes d'admission (13) sur des appareils de freinage de roue (9, 10) d'un deuxième essieu de véhicule sont fermées, **caractérisé en ce que**, dans le cas où une demande de pression de freinage dans le système de freinage (1) est modifiée, les soupapes d'admission (13) sur les appareils de freinage de roue (9, 10) du deuxième essieu de véhicule sont ouvertes au moins temporairement et les soupapes d'échappement (14) sur les appareils de freinage de roue (9, 10) du deuxième essieu de véhicule restent fermées pendant la période d'immobilisation du véhicule.

2. Procédé selon la revendication 1, **caractérisé en ce que** les soupapes d'admission (13) sur les appareils de freinage de roue (9, 10) du deuxième essieu de véhicule restent ouvertes aussi longtemps que le véhicule est immobilisé à l'arrêt.

3. Procédé selon la revendication 2, **caractérisé en ce que** les soupapes d'admission (13) sur les appareils de freinage de roue (9, 10) du deuxième essieu de véhicule restent ouvertes aussi longtemps que le véhicule est immobilisé à l'arrêt, mais que la pression de freinage dans les appareils de freinage de roue (9, 10) du deuxième essieu de véhicule n'a pas encore atteint une pression maximale.

4. Procédé selon l'une quelconque des revendications 1 à 3, **caractérisé en ce que** la demande de pression de freinage modifiée dans le système de freinage (19) est générée par l'intermédiaire d'un actionnement de la pédale de frein par le conducteur.

5. Procédé selon l'une quelconque des revendications 1 à 4, **caractérisé en ce que** la demande de pression de freinage modifiée dans le système de freinage est générée (1) par un générateur de pression de freinage (16) pouvant être commandé, réalisé séparément de la pompe hydraulique (18, 19).

6. Procédé selon la revendication 5, **caractérisé en ce que** le générateur de pression de freinage (16) pouvant être commandé, réalisé séparément de la pompe hydraulique (18, 19) est configuré sous la forme d'un amplificateur de force de freinage qui actionne le maître-cylindre de frein du système de freinage au moyen d'un moteur électrique.

7. Procédé selon l'une quelconque des revendications 1 à 6, **caractérisé en ce que** la pompe hydraulique (18, 19) reste activée tant que les soupapes d'admission (13) restent ouvertes sur les appareils de freinage de roue (9, 10) du deuxième essieu de véhicule.

8. Procédé selon l'une quelconque des revendications 1 à 7, **caractérisé en ce qu'**à l'arrêt, un moteur de freinage électrique (31) d'un dispositif de freinage électromécanique est actionné dans l'appareil de freinage de roue (8, 11) du premier essieu de véhicule.

9. Procédé selon l'une quelconque des revendications 1 à 8, **caractérisé en ce que** la pompe hydraulique (18, 19) est configurée sous forme de pompe ESP (programme de stabilité électronique).

10. Appareil de commande pour la commande des composants réglables d'un système de freinage hydraulique (1) dans un véhicule pour la mise en œuvre du procédé selon l'une quelconque des revendications 1 à 9.

11. Système de freinage hydraulique dans un véhicule avec un appareil de commande (20) selon la revendication 10.

12. Système de freinage selon la revendication 11, **caractérisé en ce que** le système de freinage (1) comprend un dispositif de freinage électromécanique avec au moins un moteur de freinage électrique (31) qui déplace un piston de frein (34) contre un disque de frein (38) pour générer une force de freinage.

13. Produit de programme informatique avec un code de programme, qui est conçu pour mettre en œuvre des étapes du procédé selon l'une quelconque des revendications 1 à 9 lorsque le produit de programme informatique est exécuté dans un appareil de commande selon la revendication 10.
